# EUROPÄISCHE PATENTANMELDUNG

(11) **EP 1 333 358 A2**
(43) Veröffentlichungstag der Anmeldung: **06.08.2003**
(21) Anmeldenummer: 02027401.5
(22) Anmeldetag: 09.12.2002
(51) Int. Cl.: G06F 1/18, G06F 1/20

(54) **Computergehäuse**

(30) Priorität: 02.01.2002 DE 10200054
(71) Anmelder: Fujitsu Siemens Computers GmbH, 81739 München (DE)
(72) Erfinder: Schmidt, Heinrich, 33129 Delbrück (DE)
(74) Vertreter: Epping Hermann & Fischer

(57) **Zusammenfassung**

Die Erfindung betrifft ein Computergehäuse mit einem Slotwinkelfeld (3), wobei zur verbesserten EMV-Kontaktierung am Slotwinkelfeld (3) zwischen den Slotöffnungen (6) Kontaktfedern (13) und zur besseren Kühlung innerhalb sowie oberhalb und unterhalb der Kontaktfedern Lüftungsöffnungen (14) vorgesehen sind.

## Beschreibung

Die Erfindung betrifft ein Computergehäuse mit einer Bodenwandung und zumindest zwei Seitenwandungen, wobei an einer Seitenwandung ein Slotwinkel fehlt mit einem kurzen horizontalen Abschnitt und einem längeren vertikalen Abschnitt vorgesehen ist, in welchem nebeneinander angeordnete Slotöffnungen ausgebildet sind, die durch Stege untereinander beabstandet sind.

In das Computergehäuse könne von oben Steckkarten, in der Regel PCI-Karten, eingeschoben werden. Pro Slotöffnung im Slotwinkelfeld kann eine PCI-Karte aufgenommen werden, sofwern im Motherboard zur Kontaktierung der PCI-Steckkarte ein entsprechender PCI-Slot vorgesehen ist.

Bei einem Computergehäuse beziehungsweise PCI-Chassis beträgt der Abstand benachbarter Karten 25,4 mm und die Breite der geschlossenen Standardblende beziehungsweise des geschlossenen Standardslotwinkeles der PCI-Karte 18,4 mm. Somit sind im Bereich des Slotwinkelfeldes die Standabblenden von nebeneinander angeordneten PCI-Steckkarten nur 7 mm beabstandet.

Aufgrund der engen Anordnung der PCI-Steckkarten in Computergehäuse muß für eine ausreichende Kühlung gesorgt werden, damit sich die PCI-Karten nicht überhitzen. Ein weiteres Problem liegt darin, daß die Standabblenden beziehungsweise Slotwinkel der PCI-Karten nicht immer exakt senkrecht ausgerichtet und hin und wieder leicht verwunden sind und somit keine optimale Kontaktierung zum Blech des Slotwinkelfeldes erfolgt. Dies führt zu Schwierigkeiten bei der EMV-Dichtigkeit des Computergehäuses.

Der Erfindung liegt daher die Aufgabe zugrunde, das gattungsgemäße Computergehäuse so weiter zu entwickeln, daß bei eng nebeneinander angeordneten PCI-Karten ein optimaler Luftdurchsatz sowie eine optimale EMV-Kontaktierung im Bereich des Slotwinkelfeldes gewährleistet ist.

Die Aufgabe wird erfindungsgemäß dadurch gelöst, daß an den Stegen zwischen den Slotöffnungen Kontaktfedern zur Kontaktierung der Slotwinkel sowie auch Lüftungsöffnungen vorgesehen sind.

Durch die Ausbildung der Kontaktfedern und der Lüftungsöffnungen in den Stegen im Bereich zwischen den Rändern zweier Slotwinkel von benachbarten PCI-Steckkarten ist gewährleistet, daß ein Luftstrom zwischen den beiden PCI-Steckkarten hindurchströmen kann und gleichzeitig auch eine der EMV-Kontaktierung zwischen Slotwinkel und Slotwinkelfeld erfolgt.

Um eine zuverlässige EMV-Kontaktierung zu erzielen, ist es günstig, die Kontaktfedern über die volle Höhe der senkrechten Abschnitte auszubilden.

Gemäß einer bevorzugten Ausführungsform ist die Kontaktfeder beidseitig eines Steges ausgebildet und sind die Lüftungsöffnungen innerhalb der Kontaktfedern angeordnet.

Bei dieser Ausführungsform wird somit beidseitig eine ideale EMV-Kontaktierung mit den Slotwinkeln der Steckkarten erzielt und trotz des geringen zur Verfügung stehenden Raumes auf den Stegen kann innerhalb der beiden Seiten der Kontaktfeder durch die dort angeordneten Lüftungsöffnungen die Kühlluft zwischen die PCI-Steckkarten einströmen.

Eine Erleichterung bei der Montage und der Herstellung kann dadurch erzielt werden, daß die Kontaktfeder für beide Seiten einstückig ausgebildet ist und die beiden Seiten über Laschen verbunden sind, über welche die Kontaktfedern mit den Stegen vernietet werden kann.

Eine vorteilhafte Weiterbildung sieht vor, daß die Kontaktfeder zumindest an der Oberseite beidseitig abgeschrägt ist, so daß für das Einstecken der Slotwinkel an den Steckkarten ein Einführtrichter entsteht.

Dies ist insbesondere beim Wechseln einer Karte während des Betriebes von großer Bedeutung, damit beim Einstecken während ds Betriebes keine Kontaktierung einer benachbarten Karte erfolgt, was die Gefahr eines Kurzschlusses mit sich führen würde.

Auch gegenüber des Slotwinkelfeldes weisen die PCI-Karten in der Regel einen Adapter auf, mit dem sie in entsprechenden Führungen an den gegenüberliegenden Seitenwänden geführt eingesteckt werden können.

Somit ist beidseitig beim Einstecken einer PCI-Karte die Führung gewährleistet und auch ein sicheres Wechseln der Karte während des Betriebes ohne die Gefahr von Kurzschlüssen mit benachbarten Karten möglich.

Um einen optimalen Luftdurchsatz für die Kühlung der PCI-Karten zu erzielen, sind auch gegenüberliegend der Lüftungsöffnungen an den Stegen zwischen den Slotwinkelöffnungen auf der anderen Seite des Computergehäuses Lüftungsöffnungen vorgesehen, so daß ein waagrechter Luftstrom durch das Computergehäuse beziehungsweise PCI-Chassis erfolgen kann.

Nachfolgend wird die Erfindung anhand eines in den Zeichnungen dargestellten Ausführungsbeispieles näher beschrieben. In den Zeichnungen zeigen:
- Figur 1: eine Schrägansicht des Computergehäuses,
- Figur 2: ein Teil des Slotwinkelfeldes in der Ansicht vom Inneren des Computergehäuses,
- Figur 3: eine Seitenansicht der Kontaktfeder und
- Figur 4: die Kontaktfeder in Schrägansicht.

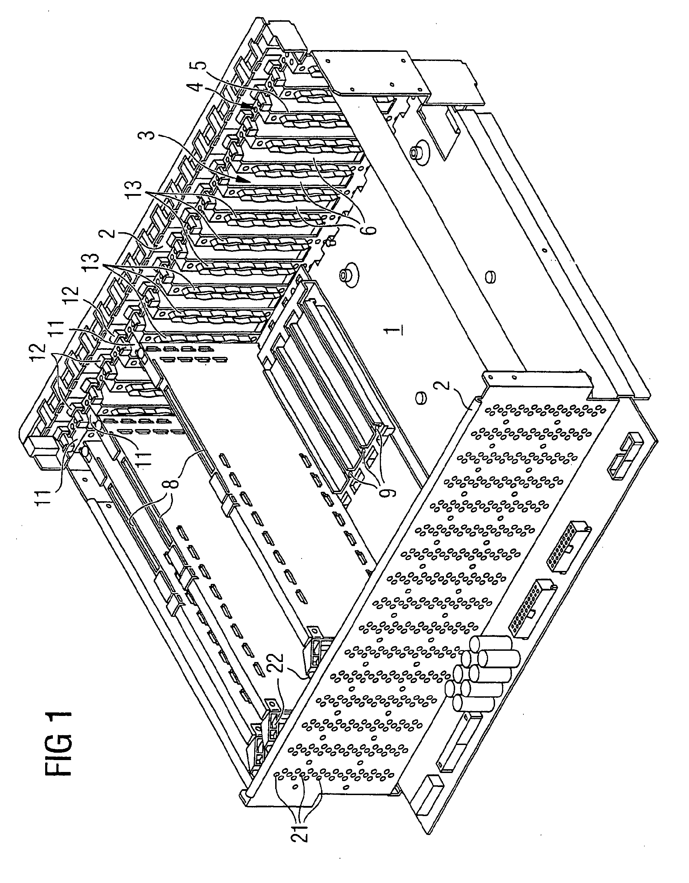

Figur 1 zeigt ein Computergehäuse beziehungsweise ein PCI-Chassis in einer Schrägansicht. Das Computergehäuse weist eine Bodenwandung 1, zwei Seitenwandungen 2 sowie ein Slotwinkelfeld 3 an einer der beiden Seitenwandungen 2 auf.

Das Slotwinkelfeld 3 besteht aus einem horizontalen kurzen Abschnitt 4, welcher parallel zur Bodenwandung 1 ausgerichtet ist und einem längeren vertikalen Abschnitt 5, welcher senkrecht zur Bodenwandung 1 und parallel zur Seitenwandung 2 ausgerichtet ist und auf der einen Seite die Seitenwandung 2 in diesem Bereich bildet. Im Slotwinkelfeld 3 sind eine Reihe von Slotwinkelöffnungen 6 vorgesehen, welche sich über die volle Höhe des Slotwinkelfeldes erstrecken. Die Slotöffnungen 6 sind durch Stege 7 voneinander beabstandet. Im linken Teil des dargestellten Computergehäuses sind drei Steckkarten 8 eingesteckt. Die Steckkarten 8 werden in entsprechende Slots 9 in einem parallel zur Bodenwandung 1 montierten Motherboard eingesteckt. Stirnseitig weisen die Steckkarten 8 jeweils die übliche Standardblende oder den üblichen Standardslotwinkel 11 auf, welcher mit seinem kurzen horizontalen Abschnitt auf dem horizontalen Abschnitt 4 des Slotwinkelfeldes aufliegt und mit seinem vertikalen Abschnitt die Slotöffnungen 6 verschließt und seitlich jeweils an den Stegen 7 aufliegt. Am kurzen horizontalen Abschnitt 4 des Slotwinkelfeldes sind Klemmteile 12 zur Fixierung der Slotwinkel 11 vorgesehen.

Da die Slotwinkel 11 der PCI-Karten 8 nicht immer genau zum vertikalen Abschnitt 5 des Slotwinkelfeldes 3 ausgerichtet sind, kommt es immer wieder vor, daß nur eine ungenügende EMV-Dichtigkeit erzielt wird.

Hierzu sind erfindungsgemäß an den Stegen 7 Kontaktfedern 13 angeordnet. Um gleichzeitig auch eine gute Lüftung der sehr eng beabstandeten PCI-Karten 8 zu erzielen, sind innerhalb der Kontaktfedern 13 sowie auch darüber und darunter in den Stegen Lüftungsöffnungen 14 vorgesehen.

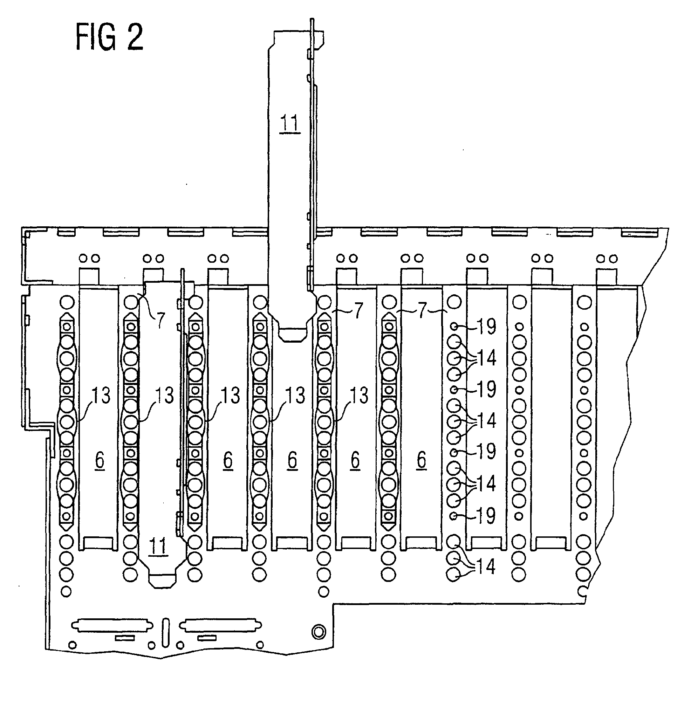

Die Kontaktfeder 13 wird anhand der Figuren 2, 3 und 4 und die Lüftungsöffnungen 14 anhand der Figur 2 näher erläutert.

Figur 2 zeigt eine Seitenansicht einer Seitenwandung 2 des Computergehäuses mit Blick auf die Innenseite des Slotwinkelfeldes 3. Die Slotöffnungen 6 sind wie bereits zu figur 1 beschrieben jeweils durch die Stege 7 beabstandet, wobei in den Stegen 7 sowie auch leicht unterhalb der Stege 7 die Lüftungsöffnungen 14 vorgesehen sind. Die Kontaktfeder 13 ist so ausgebildet, daß die Lüftungsöffnungen 14 beidseitig von der Kontaktfeder 13 umgeben sind, jedoch von dieser nicht verdeckt werden.

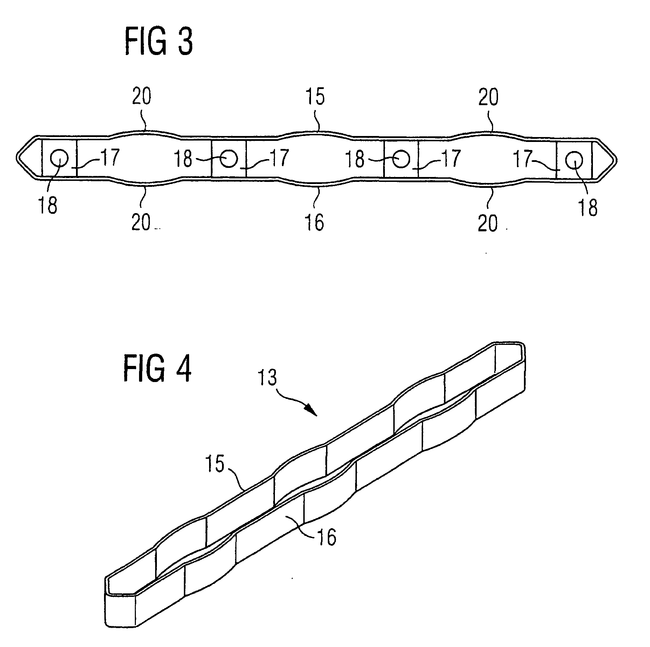

Die Figuren 3 und 4 zeigen die Kontaktfeder 13. Sie ist aus zwei symmetrischen Hälften 15 und 16 aufgebaut, die über vier Laschen 17 miteinander verbunden sind. In den Laschen 17 sind entsprechende Bohrungen 18 vorgesehen, über welche die Kontaktfeder mit entsprechenden Bohrungen 19 in den Stegen 7 des Slotwinkelfeldes 3 vernietet werden kann.

Zwischen den Laschen 17 weisen die beiden Hälften 15 und 16 jeweils eine leicht nach außen gerichtete Wölbung 20 auf. Diese kann federartig nach innen zurückfedern und dient als Kontaktpunkt zu den Seiten der Slotwinkel 11.

An den Enden sind die beiden Hälften nach innen abgeschrägt, so daß wie in Figur 2 dargestellt, für das Einsetzen der Slotwinkel beziehungsweise der Kartenblenden an den PCI-Karten 8 ein Einführtrichter entsteht.

Wie in Figur 4 beziehungsweise Figur 1 dargestellt, weisen die beiden Hälften 15, 16 der Kontaktfeder 13 eine Höhe von einigen Millimetern auf, damit auch stark verwundene oder leicht schräg eingebaute Slotwinkel sicher kontaktiert werden.

Durch die Kontaktfeder 13 wird somit zum einen eine sichere EMV-Kontaktierung erzielt und durch die Anordnung der Lüftungsöffnungen 14 innerhalb der Kontaktfeder 13 sowie auch darüber und darunter wird gewährleistet, daß auch die eng beabstandeten Karten genügend gekühlt werden.

Um einen Luftstrom durch das PCI-Chassis zwischen den PCI-Karten zu ermöglichen, sind auch an der anderen Seitenwandung 2 Lüftungsöffnungen 21 ausgebildet, die im wesentlichen ebenfalls im Zwischenraum zwischen den PCI-Karten angeordnet sind.

Wie in Figur 1 dargestellt, sind an der anderen Seitenwand 2 ebenfalls Führungen 22 an der Innenseite vorgesehen, welche ebenso wie die Kontaktfedern 13 auf der anderen Seite ein geführtes Einstecken der PCI-Karten 8 ermöglichen.

Somit können die PCI-Karten 8 auch unproblematisch und ohne die Gefahr von Kurzschlüssen während des Betriebes (Hotplug) getauscht werden.

### Bezugszeichenliste

- 1: Bodenwandung
- 2: Seitenwandungen
- 3: Slotwinkelfeld
- 4: horizontaler Abschnitt
- 5: vertikaler Abschnitt
- 6: Slotöffnungen
- 7: Stege
- 8: Steckkarten
- 9: Slots
- 10: Motherboard
- 11: Slotwinkel
- 12: Klemmteile
- 13: Kontaktfedern
- 14: Lüftungsöffnungen
- 15: Hälfte
- 16: Hälfte
- 17: Laschen
- 18: Bohrung
- 19: Bohrung
- 20: Wölbung
- 21: Luftöffnung
- 22: Führungen

## Patentansprüche

1. Computergehäuse mit einer Bodenwandung (1) und zumindest zwei Seitenwandungen (2), wobei an einer Seitenwandung (2) ein Slotwinkelfeld (3) mit einem kurzen horizontalen Abschnitt (4) und einem längeren vertikalen Abschnitt (5) vorgesehen ist, in welchem nebeneinander angeordnete Slotöffnungen (6) ausgebildet sind, die durch Stege (7) untereinander beabstandet sind,
**dadurch gekennzeichnet, daß**
an den Stegen (7) zwischen den Slotöffnungen (6) Kontaktfedern (13) zur Kontaktierung der Slotwinkel (11) sowie auch Lüftungsöffnungen (14) vorgesehen sind.

2. Computergehäuse nach Anspruch 1,
**dadurch gekennzeichnet, daß**
die Kontaktfedern (13) über die volle Höhe der senkrechten Abschnitte (5) ausgebildet sind.

3. Computergehäuse nach Anspruch 1 oder 2,
**dadurch gekennzeichnet, daß**
eine Kontaktfeder (13) jeweils beidseitig des Steges (7) ausgebildet ist und innerhalb der beiden Seiten der Kontaktfeder (13) die Luftöffnungen (14) angeordnet sind.

4. Computergehäuse nach Anspruch 3,
**dadurch gekennzeichnet, daß**
die beiden Seiten der Kontaktfeder (13) durch Laschen (17) verbunden sind, über welche die Kontaktfeder (13) an den Stegen (7) befestigbar ist.

5. Computergehäuse nach einem der Ansprüche 1 bis 4,
**dadurch gekennzeichnet, daß**
die Kontaktfeder (13) zumindest an der Oberseite beidseitig abgeschrägt ist, so daß für das Einstecken der Slotwinkel (11) ein Einführtrichter entsteht.

6. Computergehäuse nach einem der Ansprüche 1 bis 5,
**dadurch gekennzeichnet, daß**
an der Seitenwandung (2) gegenüber des Slotfeldes (3) ebenso Lüftungsöffnungen (21) vorgesehen sind.

7. Computergehäuse nach Anspruch 6,
**dadurch gekennzeichnet, daß**
die Lüftungsöffnungen (21) fluchtend gegenüberliegend den Lüftungsöffnungen (14) an der Seite des Slotfeldes (3) angeordnet sind.
